# EUROPEAN PATENT APPLICATION

(11) **EP 2 711 929 A1**
(43) Date of publication of application: **26.03.2014**
(21) Application number: 13183116.6
(22) Date of filing: 05.09.2013
(51) Int. Cl.: G11B 27/10, G11B 27/034, G11B 27/28, G11B 27/11, G10H 1/36

(54) **An Image Enhancement apparatus and method**

(30) Priority: 19.09.2012 IN CH38952012
(71) Applicant: Nokia Corporation, 02150 Espoo (FI)
(72) Inventor: Shenoy, Ravi, 560098 Karnataka (IN); Patwardhan, Pushkar Prasad, 400601 Maharashtra (IN)
(74) Representative: Nokia Corporation

(57) **Abstract**

A method is provided, comprising: generating at least two frames from a video, wherein the at least two frames are configured to provide an animated image; determining at least one object based on the at least two frames, the at least one object having a periodicity of motion with respect to the at least two frames; determining at least one audio signal component for associating with the animated image based on a signal characteristic of at least one audio signal; and combining the at least one object and the at least one audio signal component wherein the animated image is substantially synchronised with the at least one signal component based on the signal characteristic.

## Description

### FIELD

The present invention relates to a providing additional functionality for images. The invention further relates to, but is not limited to, display apparatus providing additional functionality for images displayed in mobile devices.

### BACKGROUND

Many portable devices, for example mobile telephones, are equipped with a display such as a glass or plastic display window for providing information to the user. Furthermore such display windows are now commonly used as touch sensitive inputs. In some further devices the device is equipped with transducers suitable for generating audible feedback.

Images and animated images are known. Animated images or cinemagraph images can provide the illusion that the view is watching a video. The cinemagraph are typically still photographs in which a minor and repeated movement occurs. These are particularly useful as they can be transferred or transmitted between devices using significantly smaller bandwidth than conventional video.

### STATEMENT

According to an aspect, there is provided a method comprising: generating at least two frames from a video, wherein the at least two frames are configured to provide an animated image; determining at least one object based on the at least two frames, the at least one object having a periodicity of motion with respect to the at least two frames; determining at least one audio signal component for associating with the animated image based on a signal characteristic of at least one audio signal; and combining the at least one object and the at least one audio signal component wherein the animated image is substantially synchronised with the at least one signal component based on the signal characteristic.

Determining at least one audio signal component for associating with the animated image based on a signal characteristic may comprise: analysing the at least one audio signal to determine the signal characteristic associated with the at least one audio signal; determining at least one audio clip from the at least one audio signal based on the signal characteristic associated with the at least one audio signal; analysing the at least one audio clip to determine energy distributions between two successive beat instants of the at least one audio clip; and selecting at least one of the at least one audio clip based on the energy distributions between two successive beat instants of the at least one audio clip as the at least one audio signal component.

The signal characteristic may comprise at least one of: audio signal beat; audio signal tempo; and audio signal rhythm.

The at least one audio signal may comprise audio signal frames defined in time by audio signal frame values and wherein determining the at least one audio clip from the at least one audio signal based on the signal characteristic associated with the at least one audio signal may comprise: selecting audio clip parts from the at least one audio signal where the signal characteristic is beat tempo and the beat tempo associated with the at least one audio signal is within a defined beat tempo range; collating concurrent frame value audio clip parts to form at least one audio clip defined by an audio clip start frame value and an audio clip end frame value.

Selecting at least one of the at least one audio clip based on the energy distributions between two successive beat instants of the at least one audio clip as the at least one audio signal component may comprise: selecting audio clip parts from the at least one audio clip where a variation in the energy distribution value is less than a defined energy distribution variance value; collating concurrent frame value audio clip parts to form at least one audio clip defined by an audio clip start frame value and audio clip end frame value.

Collating concurrent frame value audio clip parts may comprise collating concurrent frame value audio clip parts greater than a defined frame length.

Selecting at least one of the at least one audio clip based on the energy distributions between two successive beat instants of the at least one audio clip as the at least one audio signal component may comprise at least one of: selecting the first audio clip as the at least one audio signal component; selecting the longest audio clip as the at least one audio signal component; and selecting the audio clip indicated in a user interface input.

The animated image may comprise at least two animation frames, and combining the at least one object and the at least one audio signal component may comprise: determining an animated image initial animation frame from the at least two animation frames; and reordering the other at least two animation frames based on the animated image initial animation frame.

Determining an animated image initial animation frame from the at least two animation frames may comprise selecting an animated image initial frame to match a signal characteristic from the at least one audio signal component.

Combining the at least one object and the at least one audio signal component may further comprise at least one of: synchronising the at least one object and the at least one audio signal component by modifying at least one video parameter; synchronising combining the at least one object and the at least one audio signal component by modifying at least one audio parameter; changing a playback speed (frames per second) of the animation frames such that the animated image length matches a beat period of the at least one audio signal component; changing a timestamp of the animation frames such that the animated image length matches a beat period of the at least one audio signal component; duplicating at least one of the animation frames such that the animated image length matches a beat period of the at least one audio signal component; deleting at least one of the animation frames such that the animated image length matches a beat period of the at least one audio signal component; time stretching the audio signal component such that the stretched audio signal component matches the animated image period; equalising and time stretching the audio signal component such that the stretched audio signal component matches the animated image period; reordering the animation frames to synchronise at least one animation frame with an attack within a tempo period; reordering the animation frames to synchronise at least one animation frame with a decay within a tempo period; changing a timestamp for at least one animation frame to synchronise at least one animation frame with an attack within a tempo period; and changing a timestamp for at least one animation frame to synchronise at least one animation frame with a decay within a tempo period.

An apparatus may be configured to perform the method as described herein.

A computer program product may comprise program instructions to cause an apparatus to perform the method as described herein.

A method may be substantially as herein described and illustrated in the accompanying drawings.

An apparatus may be substantially as herein described and illustrated in the accompanying drawings.

According to a second aspect there is provided apparatus comprising at least one processor and at least one memory including computer code for one or more programs, the at least one memory and the computer code configured to with the at least one processor cause the apparatus to at least: generate at least two frames from a video, wherein the at least two frames are configured to provide an animated image; determine at least one object based on the at least two frames, the at least one object having a periodicity of motion with respect to the at least two frames; determine at least one audio signal component for associating with the animated image based on a signal characteristic of at least one audio signal; and combine the at least one object and the at least one audio signal component wherein the animated image is substantially synchronised with the at least one signal component based on the signal characteristic.

Determining at least one audio signal component for associating with the animated image based on a signal characteristic may cause the apparatus to: analyse the at least one audio signal to determine the signal characteristic associated with the at least one audio signal; determine at least one audio clip from the at least one audio signal based on the signal characteristic associated with the at least one audio signal; analyse the at least one audio clip to determine energy distributions between two successive beat instants of the at least one audio clip; and select at least one of the at least one audio clip based on the energy distributions between two successive beat instants of the at least one audio clip as the at least one audio signal component.

The signal characteristic may comprise at least one of: audio signal beat; audio signal tempo; and audio signal rhythm.

The at least one audio signal may comprise audio signal frames defined in time by audio signal frame values and wherein determining the at least one audio clip from the at least one audio signal based on the signal characteristic associated with the at least one audio signal may cause the apparatus to: select audio clip parts from the at least one audio signal where the signal characteristic is beat tempo and the beat tempo associated with the at least one audio signal is within a defined beat tempo range; collate concurrent frame value audio clip parts to form at least one audio clip defined by an audio clip start frame value and an audio clip end frame value.

Selecting at least one of the at least one audio clip based on the energy distributions between two successive beat instants of the at least one audio clip as the at least one audio signal component may cause the apparatus to: select audio clip parts from the at least one audio clip where a variation in the energy distribution value is less than a defined energy distribution variance value; collate concurrent frame value audio clip parts to form at least one audio clip defined by an audio clip start frame value and audio clip end frame value.

Collating concurrent frame value audio clip parts may cause the apparatus to collate concurrent frame value audio clip parts greater than a defined frame length.

Selecting at least one of the at least one audio clip based on the energy distributions between two successive beat instants of the at least one audio clip as the at least one audio signal component may cause the apparatus to perform at least one of: select the first audio clip as the at least one audio signal component; select the longest audio clip as the at least one audio signal component; and select the audio clip indicated in a user interface input. The animated image may comprise at least two animation frames, and combining the at least one object and the at least one audio signal component may cause the apparatus to: determine an animated image initial animation frame from the at least two animation frames; and reorder the other at least two animation frames based on the animated image initial animation frame.

Determining an animated image initial animation frame from the at least two animation frames may cause the apparatus to select an animated image initial frame to match a signal characteristic from the at least one audio signal component.

Combining the at least one object and the at least one audio signal component may further cause the apparatus to perform at least one of: synchronise the at least one object and the at least one audio signal component by modifying at least one video parameter; synchronise combining the at least one object and the at least one audio signal component by modifying at least one audio parameter; change a playback speed (frames per second) of the animation frames such that the animated image length matches a beat period of the at least one audio signal component; change a timestamp of the animation frames such that the animated image length matches a beat period of the at least one audio signal component; duplicating at least one of the animation frames such that the animated image length matches a beat period of the at least one audio signal component; delete at least one of the animation frames such that the animated image length matches a beat period of the at least one audio signal component; time stretch the audio signal component such that the stretched audio signal component matches the animated image period; equalise and time stretch the audio signal component such that the stretched audio signal component matches the animated image period; reorder the animation frames to synchronise at least one animation frame with an attack within a tempo period; reorder the animation frames to synchronise at least one animation frame with a decay within a tempo period; change a timestamp for at least one animation frame to synchronise at least one animation frame with an attack within a tempo period; and change a timestamp for at least one animation frame to synchronise at least one animation frame with a decay within a tempo period.

According to third aspect there is provided an apparatus comprising: a camera configured to generate at least two frames from a video, wherein the at least two frames are configured to provide an animated image; a video processor configured to determine at least one object based on the at least two frames, the at least one object having a periodicity of motion with respect to the at least two frames; an audio analyser configured to determine at least one audio signal component for associating with the animated image based on a signal characteristic of at least one audio signal; and a synchroniser configured to combine the at least one object and the at least one audio signal component wherein the animated image is substantially synchronised with the at least one signal component based on the signal characteristic.

The audio analyser may comprise: a signal characteristic analyser configured to analyse the at least one audio signal to determine the signal characteristic associated with the at least one audio signal; a signal characteristic determiner configured to determine at least one audio clip from the at least one audio signal based on the signal characteristic associated with the at least one audio signal; an energy estimator configured to analyse the at least one audio clip to determine energy distributions between two successive beat instants of the at least one audio clip; and a selector configured to select at least one of the at least one audio clip based on the energy distributions between two successive beat instants of the at least one audio clip as the at least one audio signal component.

The signal characteristic analyser may comprise at least one of: audio signal beat detector; audio signal tempo detector; and audio signal rhythm detector.

The at least one audio signal may comprise audio signal frames defined in time by audio signal frame values and wherein the signal characteristic determiner may comprise: an audio clip part selector configured to select audio clip parts from the at least one audio signal where the signal characteristic is beat tempo and the beat tempo associated with the at least one audio signal is within a defined beat tempo range; an audio clip part collator configured to collate concurrent frame value audio clip parts to form at least one audio clip defined by an audio clip start frame value and an audio clip end frame value.

The selector may comprise: a part selector configured to select audio clip parts from the at least one audio clip where a variation in the energy distribution value is less than a defined energy distribution variance value; and a part collator configured to collate concurrent frame value audio clip parts to form at least one audio clip defined by an audio clip start frame value and audio clip end frame value.

The part collator may be configured to collate concurrent frame value audio clip parts greater than a defined frame length.

The selector may comprise at least one of: a first audio clip selector configured to select the first audio clip as the at least one audio signal component; a longest audio clip selector configured to select the longest audio clip as the at least one audio signal component; and a user interface selector configured to select the audio clip indicated in a user interface input.

The animated image may comprise at least two animation frames, and the synchronizer may comprise: an initial frame selector configured to determine an animated image initial animation frame from the at least two animation frames; and a reorderer configured to reorder the other at least two animation frames based on the animated image initial animation frame.

The initial frame selector may comprise a frame selector configured to select an animated image initial frame to match a signal characteristic from the at least one audio signal component.

The synchroniser may comprise an audio-video synchroniser configured to perform at least one of: synchronise the at least one object and the at least one audio signal component by modifying at least one video parameter; synchronise combining the at least one object and the at least one audio signal component by modifying at least one audio parameter; change a playback speed (frames per second) of the animation frames such that the animated image length matches a beat period of the at least one audio signal component; change a timestamp of the animation frames such that the animated image length matches a beat period of the at least one audio signal component; duplicating at least one of the animation frames such that the animated image length matches a beat period of the at least one audio signal component; delete at least one of the animation frames such that the animated image length matches a beat period of the at least one audio signal component; time stretch the audio signal component such that the stretched audio signal component matches the animated image period; equalise and time stretch the audio signal component such that the stretched audio signal component matches the animated image period; reorder the animation frames to synchronise at least one animation frame with an attack within a tempo period; reorder the animation frames to synchronise at least one animation frame with a decay within a tempo period; change a timestamp for at least one animation frame to synchronise at least one animation frame with an attack within a tempo period; and change a timestamp for at least one animation frame to synchronise at least one animation frame with a decay within a tempo period.

According to a fourth aspect there is provided an apparatus comprising: means for generating at least two frames from a video, wherein the at least two frames are configured to provide an animated image; means for determining at least one object based on the at least two frames, the at least one object having a periodicity of motion with respect to the at least two frames; means for determining at least one audio signal component for associating with the animated image based on a signal characteristic of at least one audio signal; and means for combining the at least one object and the at least one audio signal component wherein the animated image is substantially synchronised with the at least one signal component based on the signal characteristic.

The means for determining at least one audio signal component for associating with the animated image based on a signal characteristic may comprise: means for analysing the at least one audio signal to determine the signal characteristic associated with the at least one audio signal; means for determining at least one audio clip from the at least one audio signal based on the signal characteristic associated with the at least one audio signal; means for analysing the at least one audio clip to determine energy distributions between two successive beat instants of the at least one audio clip; and means for selecting at least one of the at least one audio clip based on the energy distributions between two successive beat instants of the at least one audio clip as the at least one audio signal component.

The signal characteristic may comprise at least one of: audio signal beat; audio signal tempo; and audio signal rhythm.

The at least one audio signal may comprise audio signal frames defined in time by audio signal frame values and wherein the means for determining the at least one audio clip from the at least one audio signal based on the signal characteristic associated with the at least one audio signal may comprise: means for selecting audio clip parts from the at least one audio signal where the signal characteristic is beat tempo and the beat tempo associated with the at least one audio signal is within a defined beat tempo range; means for collating concurrent frame value audio clip parts to form at least one audio clip defined by an audio clip start frame value and an audio clip end frame value.

The means for selecting at least one of the at least one audio clip based on the energy distributions between two successive beat instants of the at least one audio clip as the at least one audio signal component may comprise: means for selecting audio clip parts from the at least one audio clip where a variation in the energy distribution value is less than a defined energy distribution variance value; means for collating concurrent frame value audio clip parts to form at least one audio clip defined by an audio clip start frame value and audio clip end frame value.

The means for collating concurrent frame value audio clip parts may comprise means for collating concurrent frame value audio clip parts greater than a defined frame length.

The means for selecting at least one of the at least one audio clip based on the energy distributions between two successive beat instants of the at least one audio clip as the at least one audio signal component may comprise at least one of: means for selecting the first audio clip as the at least one audio signal component; means for selecting the longest audio clip as the at least one audio signal component; and selecting the audio clip indicated in a user interface input.

The animated image may comprise at least two animation frames, and the means for combining the at least one object and the at least one audio signal component may comprise: means for determining an animated image initial animation frame from the at least two animation frames; and means for reordering the other at least two animation frames based on the animated image initial animation frame.

The means for determining an animated image initial animation frame from the at least two animation frames may comprise means for selecting an animated image initial frame to match a signal characteristic from the at least one audio signal component.

The means for combining the at least one object and the at least one audio signal component may further comprise at least one of: means for synchronising the at least one object and the at least one audio signal component by modifying at least one video parameter; means for synchronising combining the at least one object and the at least one audio signal component by modifying at least one audio parameter; means for changing a playback speed (frames per second) of the animation frames such that the animated image length matches a beat period of the at least one audio signal component; changing a timestamp of the animation frames such that the animated image length matches a beat period of the at least one audio signal component; means for duplicating at least one of the animation frames such that the animated image length matches a beat period of the at least one audio signal component; means for deleting at least one of the animation frames such that the animated image length matches a beat period of the at least one audio signal component; means for time stretching the audio signal component such that the stretched audio signal component matches the animated image period; means for equalising and time stretching the audio signal component such that the stretched audio signal component matches the animated image period; means for reordering the animation frames to synchronise at least one animation frame with an attack within a tempo period; reordering the animation frames to synchronise at least one animation frame with a decay within a tempo period; means for changing a timestamp for at least one animation frame to synchronise at least one animation frame with an attack within a tempo period; and means for changing a timestamp for at least one animation frame to synchronise at least one animation frame with a decay within a tempo period.

A computer program product stored on a medium for causing an apparatus to may perform the method as described herein.

An electronic device may comprise apparatus as described herein.

A chipset may comprise apparatus as described herein.

### Summary of Figures

For better understanding of the present invention, reference will now be made by way of example to the accompanying drawings in which:
Figure 1 shows schematically an apparatus suitable for employing some embodiments;
Figure 2 shows schematically an example audio enhanced cinemagraph generator;
Figure 3 shows a flow diagram of the operation of the audio enhanced cinemagraph generator as shown in Figure 2 according to some embodiments;
Figure 4 shows schematically an audio selector/analyser as shown in Figure 2 according to some embodiments;
Figure 5 shows a flow diagram of the operation of the audio selector/analyser as shown in

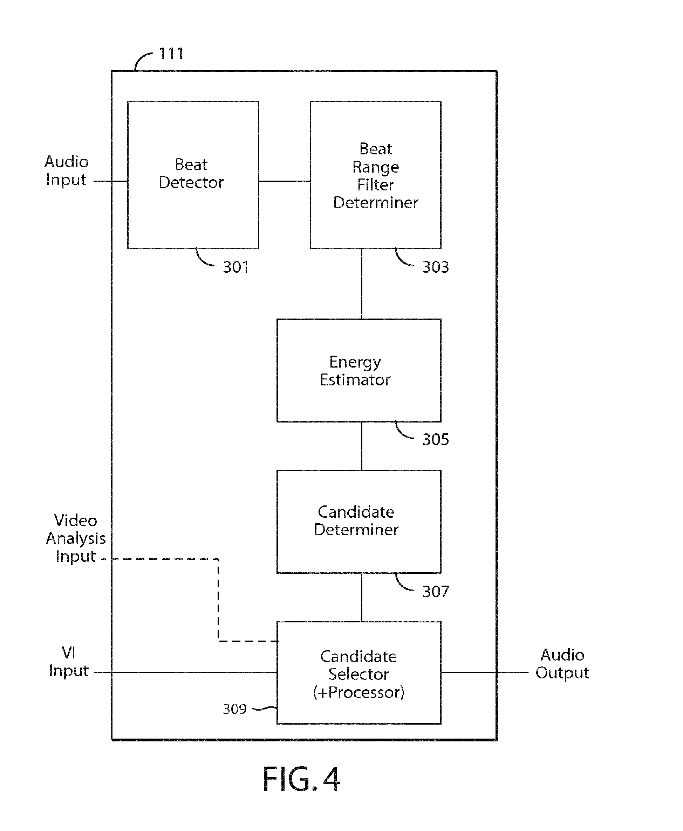

Figure 4 according to some embodiments;

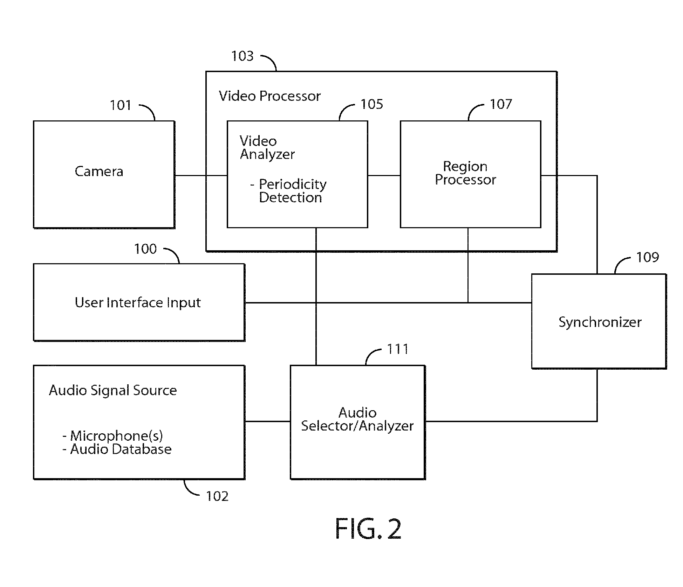

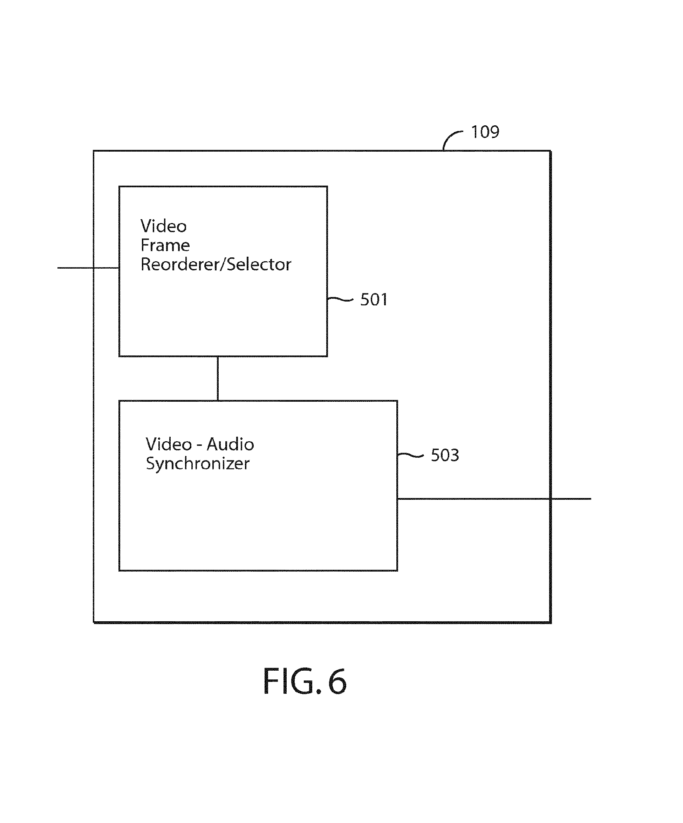

Figure 6 shows schematically a synchroniser as shown in Figure 2 according to some embodiments;

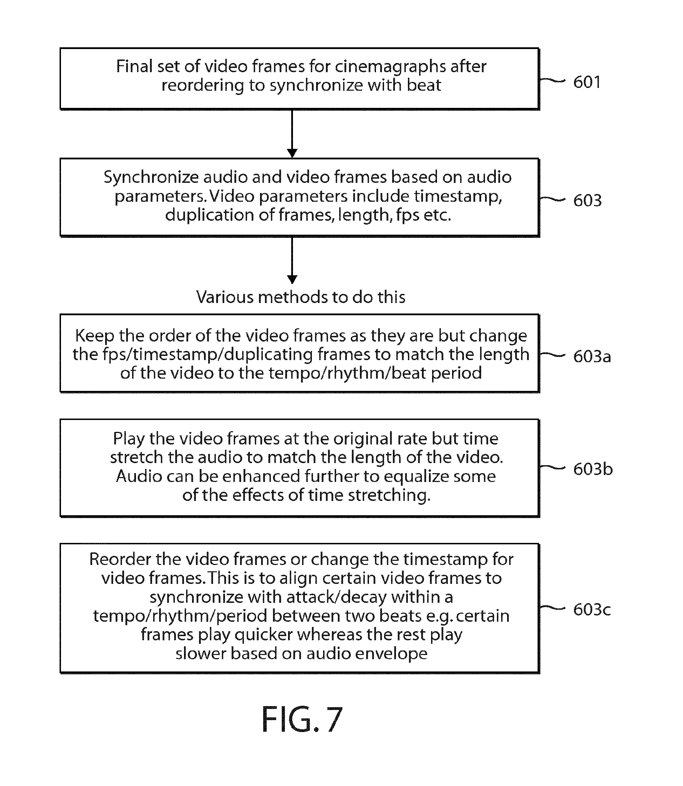

Figure 7 shows a flow diagram of the operation of the synchroniser as shown in Figure 6 according to some embodiments; and

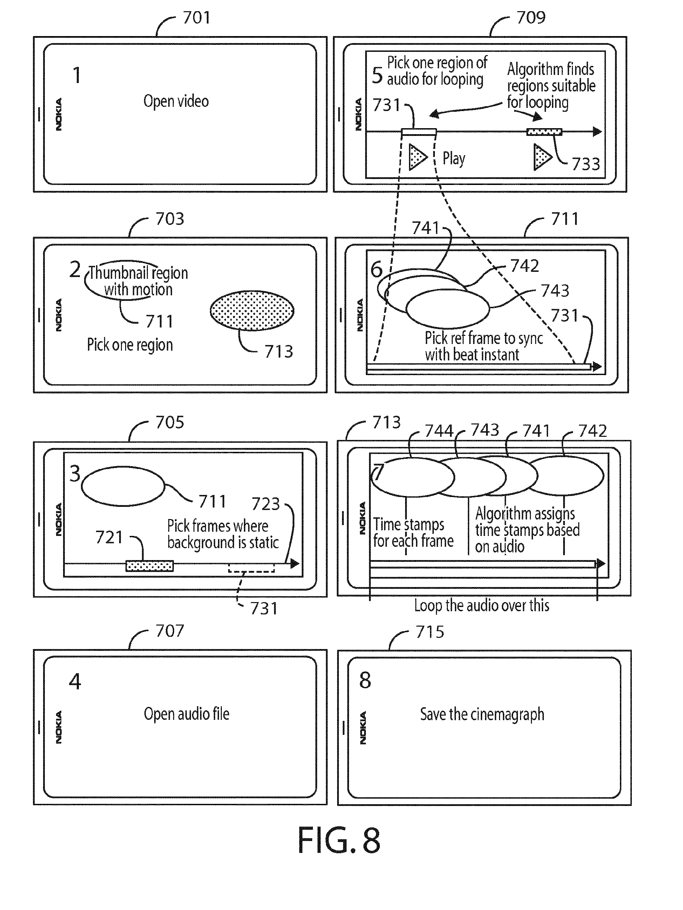

Figure 8 shows an example user interface implementation for generating an audio enhanced cinemagraph according to some embodiments.

### Description of Example Embodiments

The concept of embodiments of the application is to combine audio signals to cinemagraphs (animated images) during the generation of cinemagraphs or animated images. This can be implemented in the example shown herein by generating and embedding metadata including audio effect signals or links to the audio effect signal using at least one of intrinsic and synthetic audio signals in such a manner that the generated cinemagraph is enhanced by the audio effect.

High quality photographs and videos are known to provide a great way to relive an experience. Cinemagraphs or animated images are seen as an extension of a photograph and produced using postproduction techniques. The cinemagraph provides a means to enable motion in an object common or mutual between images or in a region of an otherwise still or static picture. For example the design or aesthetic element allows subtle motion elements while the rest of the image is still. In some cinemagraphs the motion or animation feature is repeated.

In the following description and claims the term object, common object, or region can be considered to refer to any element, object or component which is shared (or mutual) across the images used to create the cinemagraph or animated object. For example the images used as an input could be a video of a moving toy train against a substantially static background. In such an example the object, subject, common object, region, or element can be the toy train which in the animated image provides the dynamic or subtle motion element whilst the rest of the image is still. It would be understood that the object or subject is common does not necessarily that the object, subject, or element is substantially identical from frame to frame. However typically there is a large degree of correlation between subsequent image objects as the object moves or appears to move. For example the object or subject of the toy train can appear to move to and from the observer from frame to frame in such a way that the train appears to get larger/smaller or the toy train appears to turn away from or to the observer by the toy train profile changing.

In other words the size, shape and position of the region of the image identified as the subject, object or element can change from image to image, however within the image is a selected entity which from frame to frame has a degree of correlation (as compared to the static image components which have substantially perfect correlation from frame to frame).

A cinemagraph can in some ways be seen as a potential natural progression of image viewing from greyscale (black and white photography) to colour, colour to high-resolution colour images, fully static to regional motion within the photograph. However reliving an experience can be seen as being incomplete without audio, and cinemagraphs at present cannot render audio.

The problem therefore is how is to enable an apparatus to easily and without significant skilled and experienced input from the user to generate a cinemagraph or animated image such that the audio can be associated with it.

Typically a cinemagraph (or motion photograph or animated image) is constructed from a video sequence, in which audio is likely to be available or associated with it. However when attempting to try to tie the audio in the motion photograph, the recorded audio in the scene as a whole cannot be tied to the motion image, rather the attached audio should be selected and processed selectively.

It would be understood that a cinemagraph can normally be understood to have a repeatable, subtle, motion element (or subject or object) however in some situations the audio can be attached to non-repeatable object or motion element within an animated image or photograph. For example adding a lightning/thunder sound to a motion photograph. Similarly in some embodiments the audio clip or signal can be a single instance play element within a visual motion element animated scene.

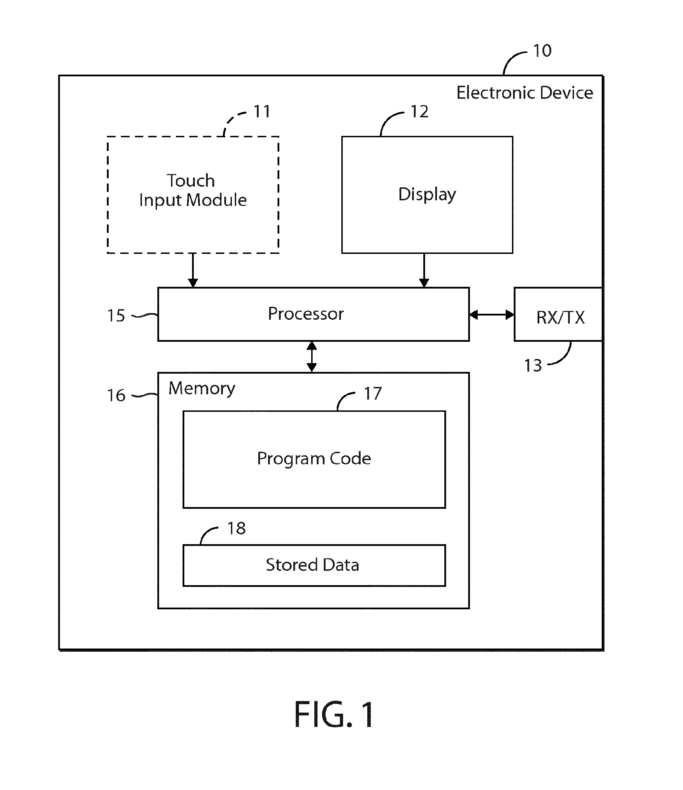

With respect to Figure 1 a schematic block diagram of an example electronic device 10 or apparatus on which embodiments of the application can be implemented. The apparatus 10 is such embodiments configured to provide improved image experiences.

The apparatus 10 is in some embodiments a mobile terminal, mobile phone or user equipment for operation in a wireless communication system. In other embodiments, the apparatus is any suitable electronic device configured to process video and audio data. In some embodiments the apparatus is configured to provide an image display, such as for example a digital camera, a portable audio player (mp3 player), a portable video player (mp4 player). In other embodiments the apparatus can be any suitable electronic device with touch interface (which may or may not display information) such as a touch-screen or touch-pad configured to provide feedback when the touch-screen or touch-pad is touched. For example in some embodiments the touch-pad can be a touch-sensitive keypad which can in some embodiments have no markings on it and in other embodiments have physical markings or designations on the front window. The user can in such embodiments be notified of where to touch by a physical identifier - such as a raised profile, or a printed layer which can be illuminated by a light guide.

The apparatus 10 comprises a touch input module or user interface 11, which is linked to a processor 15. The processor 15 is further linked to a display 12. The processor 15 is further linked to a transceiver (TX/RX) 13 and to a memory 16.

In some embodiments, the touch input module 11 and/or the display 12 are separate or separable from the electronic device and the processor receives signals from the touch input module 11 and/or transmits and signals to the display 12 via the transceiver 13 or another suitable interface. Furthermore in some embodiments the touch input module 11 and display 12 are parts of the same component. In such embodiments the touch interface module 11 and display 12 can be referred to as the display part or touch display part.

The processor 15 can in some embodiments be configured to execute various program codes. The implemented program codes, in some embodiments can comprise such routines as audio signal parsing and decoding of image data, touch processing, input simulation, or tactile effect simulation code where the touch input module inputs are detected and processed, effect feedback signal generation where electrical signals are generated which when passed to a transducer can generate tactile or haptic feedback to the user of the apparatus, or actuator processing configured to generate an actuator signal for driving an actuator. The implemented program codes can in some embodiments be stored for example in the memory 16 and specifically within a program code section 17 of the memory 16 for retrieval by the processor 15 whenever needed. The memory 15 in some embodiments can further provide a section 18 for storing data, for example data that has been processed in accordance with the application, for example pseudo-audio signal data.

The touch input module 11 can in some embodiments implement any suitable touch screen interface technology. For example in some embodiments the touch screen interface can comprise a capacitive sensor configured to be sensitive to the presence of a finger above or on the touch screen interface. The capacitive sensor can comprise an insulator (for example glass or plastic), coated with a transparent conductor (for example indium tin oxide - ITO). As the human body is also a conductor, touching the surface of the screen results in a distortion of the local electrostatic field, measurable as a change in capacitance. Any suitable technology may be used to determine the location of the touch. The location can be passed to the processor which may calculate how the user's touch relates to the device. The insulator protects the conductive layer from dirt, dust or residue from the finger.

In some other embodiments the touch input module can be a resistive sensor comprising of several layers of which two are thin, metallic, electrically conductive layers separated by a narrow gap. When an object, such as a finger, presses down on a point on the panel's outer surface the two metallic layers become connected at that point: the panel then behaves as a pair of voltage dividers with connected outputs. This physical change therefore causes a change in the electrical current which is registered as a touch event and sent to the processor for processing.

In some other embodiments the touch input module can further determine a touch using technologies such as visual detection for example a camera either located below the surface or over the surface detecting the position of the finger or touching object, projected capacitance detection, infra-red detection, surface acoustic wave detection, dispersive signal technology, and acoustic pulse recognition. In some embodiments it would be understood that 'touch' can be defined by both physical contact and 'hover touch' where there is no physical contact with the sensor but the object located in close proximity with the sensor has an effect on the sensor.

The touch input module as described here is an example of a user interface input. It would be understood that in some other embodiments any other suitable user interface input can be employed to provide an user interface input, for example to select an object, item or region from a displayed screen. In some embodiments the user interface input can thus be a keyboard, mouse, keypad, joystick or any suitable pointer device.

The apparatus 10 can in some embodiments be capable of implementing the processing techniques at least partially in hardware, in other words the processing carried out by the processor 15 may be implemented at least partially in hardware without the need of software or firmware to operate the hardware.

The transceiver 13 in some embodiments enables communication with other electronic devices, for example in some embodiments via a wireless communication network.

The display 12 may comprise any suitable display technology. For example the display element can be located below the touch input module and project an image through the touch input module to be viewed by the user. The display 12 can employ any suitable display technology such as liquid crystal display (LCD), light emitting diodes (LED), organic light emitting diodes (OLED), plasma display cells, Field emission display (FED), surface-conduction electron-emitter displays (SED), and Electrophoretic displays (also known as electronic paper, e-paper or electronic ink displays). In some embodiments the display 12 employs one of the display technologies projected using a light guide to the display window.

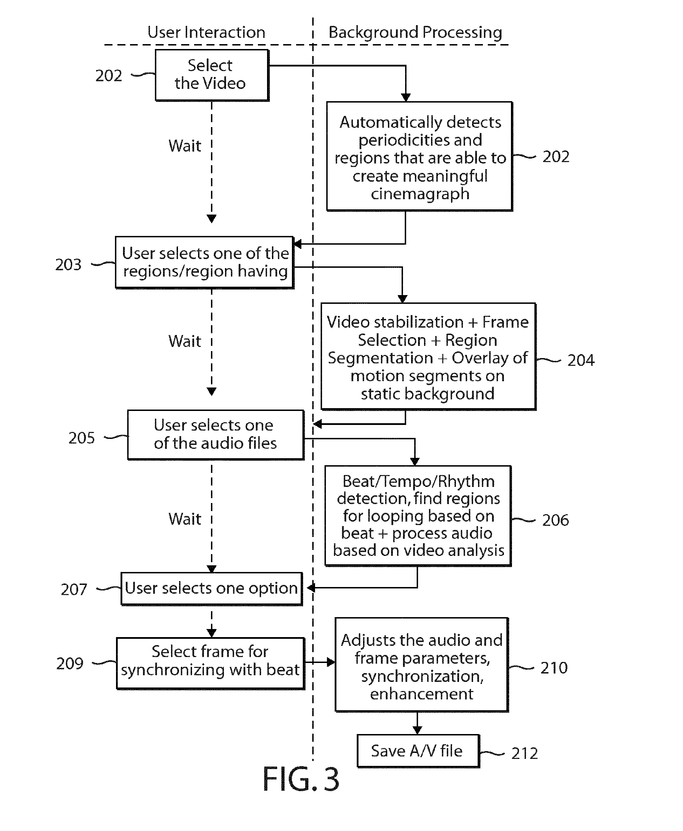

With respect to Figure 2 an example audio enhanced cinemagraph generator is shown. Furthermore with respect to Figure 3 the operation of the example audio enhanced cinemagraph generator as shown in Figure 2 is further described.

In some embodiments the audio enhanced cinemagraph generator comprises a camera 101 or is configured to receive an input from a camera 101. The camera 101 can be any suitable video or image capturing apparatus. The camera 101 can be configured to capture images and pass the image or video data to a video processor 103. In some embodiments the camera block 101 can represent any suitable video or image source. For example in some embodiments the video or images can be retrieved from a suitable video or image storing memory or database of images. The images can be stored locally, for example within the memory of the audio enhanced cinemagraph apparatus, or in some embodiments can be stored external to the apparatus and received for example via the transceiver.

In some embodiments the audio enhanced cinemagraph generator comprises a user interface input 100 or is configured to receive a suitable user interface input 100. The user interface input 100 can be any suitable user interface input. In the following examples the user interface input is an input from a touch screen sensor from a touch screen display. However it would be understood that the user interface input in some embodiments can be at least one of: a mouse or pointer input, a keyboard input, and a keypad input. The user interface input 100 is shown with respect to some embodiments in Figure 8 which shows the displayed user interface display at various stages of the cinemagraph generation stage. The example audio enhanced cinemagraph generator can in some embodiments comprise a video processor 103. The video processor 103 can be configured to receive the image or video data from the camera 101, analyse and process the video images to generate image motion/animation.

Furthermore as shown in Figure 2 the video processor 103 can be configured to receive input signals from the user interface input 100. For example in some embodiments the user interface input 100 can be configured to open or select the video from the camera 101 to be processed.

The operation of selecting the video is shown in Figure 3 by step 201.

Furthermore the user interface as shown in Figure 8 shows a user interface window 701 showing an 'open video file' user interface element.

In some embodiments the video processor 103 comprises a video analyser 105. The video analyser 105 can be configured to receive the video or image data selected by the user interface input 100 and perform an analysis of the image to determine any objects or regions of the image which have meaningful periodicity suitable for generating a cinemagraph.

The video analyser 105 can in some embodiments output the determined objects or regions to the user interface to display to the user such that the user can select one of the objects or regions. In some other embodiments the video analyser 105 can select one of the determined objects or regions according to any suitable selection criteria.

The operation of detecting periodicities and determining objects or regions which have or are able to create meaningful cinemagraphs is shown in Figure 3 by step 202. A meaningful cinemagraph can be considered to refer to adding meaningful (or complimentary) audio accompaniment that does not annoy the observer to a cinemagraph.

The user interface input 100 can then be configured to provide an input to select one of the objects or regions or region for further processing.

With respect to Figure 8 an example user interface output is shown where the user interface element 703 shows two objects or regions, a first region 711 and a second region 713, both having been determined to have suitable periodicities and therefore able to create meaningful cinemagraphs. In the following examples the user has selected the first region 711.

The selected (by the user or otherwise) region can then be passed to the region processor 107.

The operation of the user selecting of one of the regions is shown in Figure 3 by step 203.

In some embodiments the video processor 103 comprises a region processor 107. The region processor can be configured to receive the selected region and perform region processing on the image data in such a way that the output of the region processor is suitable cinemagraph video or image data.

For example in some embodiments the region processor 107 can perform at least one of the following processes, video stabilisation, frame selection, region segmentation, and overlay of motion segments on static background. In some embodiments the region processor 107 can perform object detection.

Figure 8 shows an example user interface output 705 where the object or region selected 711 is processed and the frames picked are the frames where the background is static outside of the motion region 711. Furthermore in some embodiments from the object or region selected there can be more than one time period or frame group or frame range suitable for providing animation. For example within a region 711 there can be temporal periodicities at two or more different times from which one of the time or frame groups are selected or picked. The picked or selected frames 721 are shown in the time-line below the region 711. This for example can be illustrated with respect to an image based example where the object or region 711 shows a toy train. The train completes one full circle which is captured in the first 30 frames (represented in Figure 8 by time period 721) of the video. The train then is static or does nothing for the next 100 frames. Then the train reverses for the next 30 frames (represented in Figure 8 by time period 723) and completes the circle in the reverse direction. So for a given region 711 there are two 30 frame length periods from which each of the 30 frame length train motions can be possible candidates.

In the example shown in Figure 8 the user interface 705 shows the selection of the first periodic motion 721 and not the second periodic motion 723.

The operation of region processing on the selected image data is shown in Figure 3 by step 204.

In some embodiments the region processor 107 and the video processor 103 can output the processed video or image data to the synchroniser 109.

In some embodiments the apparatus comprises an audio signal source 102. The audio signal source 102 can in some embodiments comprise a microphone or microphones. In such embodiments the microphone or microphones output an audio signal to an audio selector/analyser 111. It would be understood that in some embodiments the microphone or microphones are physically separated from the audio selector/analyser 111 and pass the information via a communications link, such as a wired or wireless link.

In some embodiments the audio signal source 102 comprises an audio database. In such embodiments the audio database can output an audio signal to the audio selector/analyser 111. The audio database can be any suitable database or linked audio signal database. For example the audio database can, in some embodiments, be a database of audio clips or audio signals stored on the Internet or within 'the cloud'. Furthermore in some embodiments the audio database can be a database or collection of audio clips, signals or links to audio signals stored within the memory of the apparatus.

In some embodiments the user interface input 100 can be configured to control the audio selector/analyser 111 to select a suitable audio file or source.

The operation of the user selecting one of the audio files is shown in Figure 3 by step 205.

Furthermore with respect to the example user interface shown in Figure 8 there is shown a user interface output 707 with a visual 'open audio file' indication.

The audio selector/analyser 111 can in some embodiments be configured to receive the audio signal which is selected and processed in a suitable manner. For example in some embodiments the audio selector/analyser 111 can be configured to perform a beat/tempo/rhythm estimation on the audio signal and select regions of the audio signal for looping in the cinemagraph based on the beat calculation values.

In some embodiments the audio selector/analyser 111 could be configured to modulate the pitch of the audio signal that is being attached based on the motion detected by the video analyser. For example a motion of an object could be smooth periodic rather than jerky and in such situation the audio selector/analyser 111 can be configured to modulate the overall periodicity of the audio according to detected motion.

The processing of audio and the selection and outputting of candidate regions for the cinemagraph is shown in Figure 3 by step 206.

In some embodiments the user interface input 100 can be used to select, from the candidate regions, a region to be output to the synchroniser 104.

The operation of the user selecting one option is shown in figure 3 in step 207.

Figure 8 furthermore shows the example user interface output 709 which is displaying two candidate regions suitable for looping from the time line. From the two candidate regions, first audio region, 731, and second audio region, 733, the user selects the first region 731.

The audio selector/analyser 111 can then output the selected audio frame information an audio signal to the synchroniser 109.

In some embodiments the apparatus comprises a synchroniser 109 configured to receive video information from the video processor 103, audio information from the audio selector/analyser 111, and user interface information from the user interface input 100. In some embodiments the synchroniser 109 can be configured to adjust the audio and/or video frame parameters and further perform synchronisation and enhancement to the audio and video signals prior to outputting the file information.

For example in some embodiments the synchroniser 109 can display on the user interface an expanded selected audio region to permit the user interface input to select frames for synchronising the image to a beat.

Figure 8 shows an example user interface output 711 which shows the selected region for audio looping 731 expanded to the full length of the screen and a series of reference frames of image data (shown as bubbles relative to the timeline) which can be used to synchronise with the beat instead. In the example shown in Figure 8 the user interface 711 has a first reference frame candidate 741, a second reference frame candidate 742, and a third reference frame candidate 743. In other words Figure 8 shows a user interface output 711 where the set of processed video frames 741, 742, 743 are the frames to be looped and the audio 731 that is associated with the set of frames.

The operation of selecting an image frame for synchronising with the beat is shown in Figure 3 by step 209.

In some embodiments the video or audio data can furthermore be manipulated such that the audio and/or video images are warped in time to produce a better finished product.

For example with respect to the user interface example shown in Figure 8 a user interface output 713 is shown where the reference frames are adjusted along the time line to produce a better finished produce. In the user interface output 713 the timestamps for each reference image frame 741, 742, 743 and 744 are adjusted based on the audio signals. Using the synchroniser 109 it is possible to provide an indication as to which frame is the first one to be played at time 0 of the audio signal (shown as the line 731 in Figure 8 user interface output 711). For example a first ordering of frames can be a natural order of extracted frames by the frames 741, 742, 743, 744 having been assigned time stamps based on the audio. However it would be understood that in some embodiments the synchroniser 109 can be configured to select to output frames (to be played) out of order. For example the synchroniser 109 could change the order to 744, 743, 741, 742 and assign time stamps based on this ordering such as shown in Figure 9 user interface output 713. Furthermore in some embodiments the synchroniser 109 can be configured to set frame timestamp distances which can differ between pairs of frames such as shown also in interface output 713 where the distance between timestamps for frames 744 and 743 are different compared to the distance between timestamps for frames 743 and 741. In other words the frames may be displayed (on playback) for different lengths of time. The distance separation between frames (controlled by timestamps) can be implemented in some embodiments where the number of frames may not conveniently fit equally (for example 15fps into 30 frames is not equal to time duration of the audio signal). In some embodiments the synchroniser 109 can maintain equidistant or regular frames by inserting (such as by duplicating a frame or interpolating frame pairs) or deleting frames.

The operation of adjusting the audio and frame parameters, synchronisation and enhancement operations are shown in Figure 3 by step 210.

The synchroniser 109 can in some embodiments be configured to save the completed cinemagraph or animate image with audio file according to any suitable format.

In some embodiments the synchroniser 109 can then be configured to mix or multiplex the data to form a cinemagraph or animated image metadata file comprising both image or video data and audio signal data. In some embodiments this mixing or multiplexing of data can generate a file comprising at least some of: video data, audio data, sub region identification data and time synchronisation data according to any suitable format. The mixer and synchroniser 109 can in some embodiments output the metadata or file output data.

Figure 8 shows the example user interface output 715 where the interface indicates the saving of the cinemagraph.

The operation of saving the file containing the audio and video information is shown in Figure 3 by step 212.

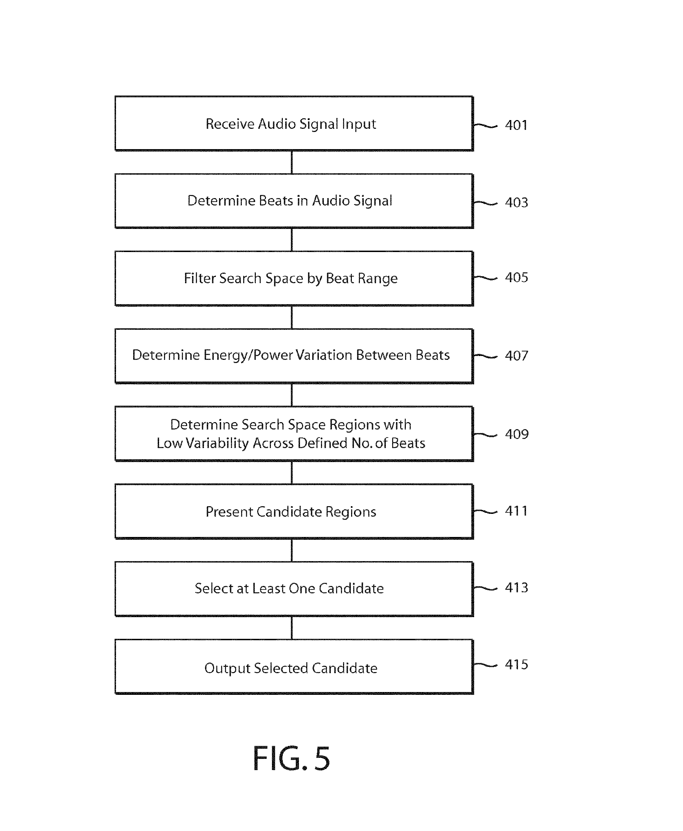

With respect to Figure 4 the audio selector/analyser is shown in further detail. Furthermore with respect to Figure 5 the operation of the audio selector/analyser 111 as shown in Figure 4 is shown in further detail.

In some embodiments the audio selector/analyser 111 can be configured to receive an audio signal from the audio signal source. As described herein the audio signal could be generated from a microphone or microphones or obtained from an audio database.

The operation of receiving the audio signal input is shown in Figure 5 by step 401.

In some embodiments the audio selector/analyser 111 comprises a beat detector 301. The beat detector or suitable beat detecting means can be configured to receive the audio input and determine a beat or rhythm estimation within the audio signal.

Any suitable beat or rhythm detecting algorithm can be used to determine the beat, tempo, or rhythm of the audio signal. In other words the audio signal beat detector can be replaced by an audio signal tempo detector or audio signal rhythm detector. In some embodiments the entire or whole of the audio file is processed to find the beat or tempo determination. The beat estimation can in some embodiments be output to a beat range filter determiner 303.

The operation of determining the beats in the audio signal is shown in Figure 5 by step 403.

In some embodiments the audio selector/analyser 111 comprises a beat range filter determiner 303. In such embodiments the beat range filter determiner 303 can be configured to filter the search space of the audio signal or audio clip such the output of the beat range filtering produces a reduced search space based on a range of beat or tempo values. In some embodiments the range or beat values or tempo values can be default values stored within the apparatus. In some embodiments the beat or tempo range values can be set by the user interface, for example in some embodiments the user interface can have an advanced menu setting where the ranges can be provided to and set by the user.

In some embodiments the audio selector/analyser and the beat range filter can comprise a signal characteristic determiner which comprises an audio clip part selector configured to select audio clip parts from the at least one audio signal where the signal characteristic is beat tempo and the beat tempo associated with the at least one audio signal is within a defined beat tempo range and an audio clip part collator configured to collate concurrent frame value audio clip parts to form at least one audio clip defined by an audio clip start frame value and an audio clip end frame value.

The beat range filter determiner 303 can be configured to output the filtered search space to an energy estimator 305.

The operation of filtering the search space by beat range is shown in Figure 5 by step 405.

In some embodiments the audio selector/analyser 111 comprises an energy estimator 305. The energy estimator 305 can be configured to determine the energy distribution or power of the audio signal between successive beats. The energy estimator 305 or suitable energy detecting or estimating means can use any suitable method for determining the energy such as an envelope detector or short-term energy estimator. In some embodiments any other relevant or suitable metric can be determined. For example in some embodiments the audio selector/analyser 11 can perform linear prediction in the spectrum. The linear prediction coefficients can be a feature vector for energy or envelope and the vectors can be compared.

In some embodiments the energy estimator 305 can be configured to output the energy values for the search regions to a candidate determiner 307.

The operation of determining the energy or power variation between beats is shown in Figure 5 by step 407.

In some embodiments the audio analyser/selector 111 comprises a candidate determiner 307. The candidate determiner 307 can be configured to receive the energy values from the energy estimator 305 for the filtered search space. The candidate determiner 307 in some embodiments is configured to determine candidate audio signal regions within the search space which have a sufficiently low energy (or other suitable metric determined by the energy estimator 305) variability across a defined number of beats. In other words the candidate determiner or part selector can be configured to select audio clip parts from the at least one audio clip where a variation in the energy distribution value is less than a defined energy distribution variance value; and further configured to collate concurrent frame value audio clip parts to form at least one audio clip defined by an audio clip start frame value and audio clip end frame value.

In some embodiments the length of the analysis window used by the candidate determiner 307 can be six beats in length. However it would be understood that the analysis window can be more or fewer than six beats in length.

The candidate determiner 307 can in some embodiments be configured to determine the energy variability or energy distribution across the analysis window (the defined number of beats) and compare this variability/distribution value or index against a defined threshold value or index. Where the energy variability is below the threshold value then a new candidate audio signal is started and ended when the variability rises above the threshold value. These candidate audio signals can then be passed to a candidate selector 309.

The determination of the candidate regions with low energy variability across a defined number of beats is shown in Figure 5 by step 409.

In some embodiments the candidate determiner 307 can be further configured to perform further search space filtering. For example in some embodiments a minimum duration of a candidate audio signal can be used as a filter variable. In other words where the candidate audio signal or audio region is less than a determined time period it is automatically discarded. An example minimum time period can be one second, though it would be understood the time period threshold can be more than or less than one second.

In some embodiments audio analyser/selector 111 comprises a candidate selector 309 configured to receive the candidate audio signals and select at least one candidate from the region.

In some embodiments the candidate selector 309 can be configured to perform the candidate selection using any suitable selection criteria, such as the first candidate audio signal, the candidate with the lowest energy variability, a candidate with the longest length or within a range of time. In some embodiments the candidate selector can comprise at least one of a first audio clip selector configured to select the first audio clip as the at least one audio signal component, a longest audio clip selector configured to select the longest audio clip as the at least one audio signal component, and a user interface selector configured to select the audio clip indicated in a user interface input.

In some embodiments the candidate determiner 307 can be configured to output to the user interface the determined candidate audio signals and in other words the candidates can be presented to the user and from the display at least one of the candidates selected.

The operation of presenting the candidate regions is shown in Figure 5 by step 411.

The operation of selecting at least one candidate is shown in Figure 5 by step 413.

The candidate selector 309 can then be configured to output the selected candidate as an audio output.

In some embodiments the candidate selector 309 comprises a candidate processor. For example in some embodiments the candidate processor can be configured to modulate the pitch of the audio signal that is being attached based on analysis of the motion of the frames to be animated as detected by the video analyser 105. For example in some embodiments the video analyser 105 can be configured to analyse the smoothness or regularity of a motion of an object being animated. The video analyser 105 thus in some embodiments can determine the motion is smooth periodic rather than jerky and in such embodiments provide the audio selector/analyser 111 and the candidate processor with an indicator to modulate the overall periodicity of the audio signal according to detected motion.

The operation of outputting the selected candidate is shown in Figure 5 by step 415.

In some embodiments the candidate audio signal output is passed to an internal database which stores only those clips of audio which are presented for future user selection.

In some embodiments the user interface can further be used to narrow the search region. Thus in some embodiments an offset can be input by the user to select only a certain portion of the initial audio file.

With respect to Figure 6 the synchroniser is shown in further detail. Furthermore with respect to Figure 7 the operation of the synchroniser 109 as shown in Figure 6 is described in further detail.

In some embodiments the synchroniser 109 is configured to receive a video image from the video processor 103, an audio signal from the audio selector 111 and an input from the user interface input 100. In some embodiments the synchroniser 109 comprises a video frame reorderer/selector 501. The video frame the reorderer/selector 501 is configured to select and reorder the set of video frames for the cinemagraph after synchronising the image frames with the beat of the audio signals. In some embodiments the alignment of specific image frames with the beat can be done manually.

The operation of selecting a set of image or video frames for cinemagraphs after reordering to synchronise with beats is shown in Figure 7 by step 601.

The video frame reorder/selector 501 can in some embodiments be configured to output the modified signal to the video-audio synchroniser 503. The video-audio synchroniser 503 can be configured to synchronise audio and video frames based on audio parameters. The video parameters modified in some embodiments can include timestamp duplication frames, length, frames per second or any other suitable parameter.

In some embodiments the video-audio synchroniser 503 can be configured to modify the time stamps on the video or audio signal such that by playing a few frames close to the reference frame in quick succession the video-audio synchroniser can create an effect of an audio attack. Similarly a video perception of an audio decay can be incorporated by repeating the image or video frames or changing the timestamps on the video or image frames.

In some embodiments the video-audio synchroniser can perform any suitable scaling all of the timestamps, changing playback rate (the output frames per second), or duplicating/removing frames to ensure that the duration of the playback for video frames is an integer multiple of the beat period.

In some embodiments additional enhancements or processing such as fade-in or fade-out on the audio can be performed in order to allow for smooth looping.

The video/audio synchroniser 503 can then be configured to output the audio and video data.

The operation of synchronising the audio and video frames based on audio parameters and video parameters is shown in Figure 7 by step 603.

In some embodiments the video-audio synchroniser 503 can perform the synchronisation of the video frames and audio by keeping the order of the video frames as they are but changing the video parameters. For example in some embodiments the video-audio synchroniser 503 can be configured to change the video playback speed (the fps or frames per second)/ change the video timestamps/ or duplicate video or image frames to match the length of the video to the tempo/rhythm/beat period.

The operation of keeping the video or image ordering but changing the video parameters is shown in Figure 7 by step 603a.

In some embodiments the video-audio synchroniser 503 can perform the synchronisation by playing the video frames at the original rate but time stretching or warping the audio signals to match the length of the video. In some embodiments the audio can be enhanced or processed further, for example by applying an equaliser to compensate for some of the effects of time stretching.

The synchronisation option of playing the video frames that the original rate time and stretching the audio is shown in Figure 7 by step 603b.

In some embodiments the video-audio synchroniser 503 can be configured to reorder the video frames or to change the timestamp for video frames. In such embodiments the video-audio synchroniser 503 can be configured to align certain video frames so that the frames synchronise with an attack/delay within the tempo/rhythm/period between two beats. For example in some embodiments the video-audio synchroniser 503 can be configured to modify the timestamps of the video (image) frames so that the video plays quicker or slower based on audio envelope. The operation of synchronising the timestamps to produce an attack/decay effect is shown in Figure 7 by step 603c.

It shall be appreciated that the term user equipment is intended to cover any suitable type of wireless user equipment, such as mobile telephones, portable data processing devices or portable web browsers. Furthermore, it will be understood that the term acoustic sound channels is intended to cover sound outlets, channels and cavities, and that such sound channels may be formed integrally with the transducer, or as part of the mechanical integration of the transducer with the device.

In general, the design of various embodiments of the invention may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The design of embodiments of this invention may be implemented by computer software executable by a data processor of the mobile device, such as in the processor entity, or by hardware, or by a combination of software and hardware. Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory used in the design of embodiments of the application may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Embodiments of the inventions may be designed by various components such as integrated circuit modules.

As used in this application, the term 'circuitry' refers to all of the following:
(a) hardware-only circuit implementations (such as implementations in only analog and/or digital circuitry) and
(b) to combinations of circuits and software (and/or firmware), such as: (i) to a combination of processor(s) or (ii) to portions of processor(s)/software (including digital signal processor(s)), software, and memory(ies) that work together to cause an apparatus, such as a mobile phone or server, to perform various functions and
(c) to circuits, such as a microprocessor(s) or a portion of a microprocessor(s), that require software or firmware for operation, even if the software or firmware is not physically present.

This definition of 'circuitry' applies to all uses of this term in this application, including any claims. As a further example, as used in this application, the term 'circuitry' would also cover an implementation of merely a processor (or multiple processors) or portion of a processor and its (or their) accompanying software and/or firmware. The term 'circuitry' would also cover, for example and if applicable to the particular claim element, a baseband integrated circuit or applications processor integrated circuit for a mobile phone or similar integrated circuit in server, a cellular network device, or other network device.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention as defined in the appended claims.

## Claims

1. An apparatus comprising:
means for generating at least two frames, wherein the at least two frames are configured to provide an animated image;
means for determining at least one object based on the at least two frames, the at least one object having a motion in the animated image;
means for determining at least one audio signal for associating with the animated image based on a signal characteristic of the at least one audio signal;and
means for combining the animated image and the at least one audio signal wherein the animated image is substantially synchronised with the at least one audio signal.

2. The apparatus as claimed in claim 1, wherein the means for determining the at least one audio signal for associating with the animated image comprises:
means for analysing the at least one audio signal to determine the signal characteristic;
means for determining at least one audio clip from the at least one audio signal based on the signal characteristic;
means for analysing the at least one audio clip to determine energy distributions between two successive beat instants of the at least one audio clip; and
means for selecting at least one of the at least one audio clip based on the energy distributions between the two successive beat instants of the at least one audio clip.

3. The apparatus as claimed in any of claims 1 or 2, wherein the signal characteristic comprises at least one of: audio signal beat; audio signal tempo; and audio signal rhythm.

4. The apparatus as claimed in any of claims 2 or 3, wherein the at least one audio signal comprises frames defined in time by audio clip frame values and the means for determining the at least one audio clip comprises at least one of:
means for selecting the at least one audio clip from the at least one audio signal wherein the signal characteristic is beat tempo within a defined beat tempo range;
means for collating concurrent audio clip frame values to form the at least one audio clip defined by an audio clip start frame value and an audio clip end frame value.

5. The apparatus as claimed in any of claims 2 to 4, wherein the means for selecting the at least one audio clip comprises:
means for selecting the at least one audio clip based on a determined variation in the energy distribution value associated with a defined energy distribution value.

6. The apparatus as claimed in claim 4, wherein the means for collating the concurrent audio clip frame values is associated with a defined frame length.

7. The apparatus as claimed in claims 2 to 6, wherein the means for selecting the at least one audio clip comprises at least one of:
means for selecting a first audio clip of the at least one audio clip as the at least one audio signal;
means for selecting a longest audio clip of the at least one audio clip as the at least one audio signal; and
means for selecting the at least one audio clip based on a user interface input.

8. The apparatus as claimed in any of previous claim, wherein the means for combining the animated image and the at least one audio signal comprises:
means for determining an initial animation frame from the animated image; and
means for ordering the other animation frame of the animated image based on the initial animation frame.

9. The apparatus as claimed in claim 8, wherein the means for determining the initial animation frame comprises:
means for selecting the initial frame to match the signal characteristic from the at least one audio signal.

10. The apparatus as claimed in any of previous claim, wherein the means for combining the animated image and the at least one audio signal further comprises at least one of:
means for synchronising the animated image and the at least one audio signal by modifying at least one video parameter;
means for synchronising the animated image and the at least one audio signal by modifying at least one audio parameter;
means for changing a playback speed of the animated image such that a duration of the animated image matches a beat period of the at least one audio signal;
means for changing a timestamp of the animated image such that a duration of the animated image matches a beat period of the at least one audio signal;
means for duplicating at least one of the at least two frames such that a duration of the animated image matches a beat period of the at least one audio signal;
means for deleting at least one of the at least two frames such that a duration of the animated image matches a beat period of the at least one audio signal;
means for time stretching the audio signal such that the stretched audio signal matches a duration of the animated image;
means for equalising and time stretching the audio signal such that the stretched audio signal matches a duration of the animated image;
means for ordering the at least two frames to synchronise at least one of the at least two frames with an attack time within a tempo period;
means for ordering the at least two frames to synchronise at least one of the at least two frames with a decay time within a tempo period;
means for changing a timestamp for at least one of the at least two frames to synchronise the at least one frame with an attack time within a tempo period; and
means for changing a timestamp for at least one of the at least two frames to synchronise the at least one frame with a decay time within a tempo period.

11. The apparatus as claimed in any of previous claim, wherein the apparatus further comprises a user interface configured to receive a suitable user interface input associated with the animated image and/or the at least one audio signal.

12. An electronic device comprising the apparatus of claims 1 to 11.

13. A method comprising:
generating at least two frames, wherein the at least two frames are configured to provide an animated image;
determining at least one object based on the at least two frames, the at least one object having a motion in the animated image;
determining at least one audio signal for associating with the animated image based on a signal characteristic of at least one audio signal; and
combining the animated image and the at least one audio signal wherein the animated image is substantially synchronised with the at least one audio signal.

14. The method as claimed in claim 13, wherein determining the at least one audio signal for associating with the animated image comprises:
analysing the at least one audio signal to determine the signal characteristic associated with the at least one audio signal;
determining at least one audio clip from the at least one audio signal;
analysing the at least one audio clip to determine energy distributions between two successive beat instants of the at least one audio clip; and
selecting at least one of the at least one audio clip based on the energy distributions between two successive beat instants of the at least one audio clip.

15. The method as claimed in claim 14, wherein the at least one audio signal comprises frames defined in time by audio clip frame values and determining the at least one audio clip comprises:
selecting the at least one audio clip from the at least one audio signal where the signal characteristic is beat tempo and the beat tempo associated with the at least one audio signal is within a defined beat tempo range;
collating concurrent audio clip frame values to form the at least one audio clip defined by an audio clip start frame value and an audio clip end frame value.
